# EUROPEAN PATENT APPLICATION

(11) **EP 4 852 483 A1**
(43) Date of publication of application: **09.12.2026**
(21) Application number: 25747726.5
(22) Date of filing: 23.01.2025
(51) Int. Cl.: H04W 12/069

(54) **TAG AUTHENTICATION METHOD AND DEVICE AND COMPUTER PROGRAM PRODUCT**

(30) Priority: 04.02.2024 CN 202410158017
(71) Applicant: Datang Mobile Communications Equipment Co., Ltd., Beijing 100085 (CN)
(72) Inventor: ZHOU, Wei, Beijing 100085 (CN); WAN, Qing, Beijing 100085 (CN)
(74) Representative: Studio Torta S.p.A.
(86) International application number: PCT/CN2025/074122
(87) International publication number: WO 2025/162156

(57) **Abstract**

This disclosure provides a tag authentication method, a tag authentication device, and a computer program product, and relates to the technical field of communication. The tag authentication method includes: receiving a first request transmitted by an authentication entity, wherein the first request includes authentication information, the authentication information being generated based on information of a tag group to which a tag belongs, and the tag group including one or more tags; and performing authentication based on the first request.

## Description

### CROSS-REFERENCE TO RELATED APPLICATION

The present application claims priority to Chinese Patent Application No. 202410158017.3, titled "TAG AUTHENTICATION METHOD AND DEVICE AND COMPUTER PROGRAM PRODUCT", filed on February 4, 2024 to the China National Intellectual Property Administration, the disclosure of which is incorporated herein by reference in its entirety.

### TECHNICAL FIELD

The present disclosure relates to the technical field of communication, and more particularly, to a tag authentication method, a tag authentication device, and a computer program product.

### BACKGROUND

Technique of using Third Generation Partnership Project (3GPP) technology to read from ambient tags applied to the Ambient Internet of Things (IoT) is under research. In view of the limited capabilities of ambient Radio Frequency Identification (RFID) tags (hereinafter referred to as RFID tags), related research will adopt simplified architectures and protocols, including security architectures and protocols. However, in related art, there is no solution regarding how to implement authentication of ambient IoT tags.

### SUMMARY

Embodiments of the present disclosure provide an ambient IoT device authentication method, an ambient IoT device authentication device, and a computer program product, to implement authentication for ambient IoT devices.

In a first aspect, an embodiment of the present disclosure provides an ambient IoT device authentication method, performed by an ambient IoT device. The ambient IoT device authentication method includes: receiving a first request transmitted by an authentication entity, wherein the first request includes authentication information, the authentication information being generated based on information of an ambient IoT device group to which the ambient IoT device belongs, the ambient IoT device group including one or more ambient IoT devices; and performing authentication based on the first request.

In some embodiments, the authentication information includes one or more of a core network nonce, an authentication network element nonce, first group member identification information, a network element authentication token, and a first anti-replay attack parameter.

In some embodiments, the performing the authentication based on the first request includes: verifying the first group member identification information; verifying the network element authentication token based on one or more of a group key stored in the ambient IoT device, the core network nonce, the authentication network element nonce, or the first group member identification information; and generating an ambient IoT device authentication response in response to a successful verification of the first group member identification information and a successful verification of the network element authentication token.

In some embodiments, the method further includes verifying a first group authentication key based on the first anti-replay attack parameter and a second anti-replay attack parameter that is stored in the ambient IoT device. The first group authentication key is a group authentication key used by the authentication entity when generating the network element authentication token. The generating the ambient IoT device authentication response includes generating the ambient IoT device authentication response in response to the successful verification of the first group member identification information, a successful verification of the first group authentication key, and the successful verification of the network element authentication token.

In some embodiments, the verifying the network element authentication token based on one or more of the group key stored in the ambient IoT device, the core network nonce, the authentication network element nonce, or the first group member identification information includes: generating a second group authentication key based on the group key and the core network nonce; generating a group member authentication key based on the second group authentication key, the authentication network element nonce, and the first group member identification information; and verifying the network element authentication token based on the group member authentication key.

In some embodiments, the generating the ambient IoT device authentication response includes: generating an ambient IoT device nonce; generating a data protection key based on the group member authentication key and the ambient IoT device nonce; and generating the ambient IoT device authentication response based on the data protection key.

In some embodiments, the method further includes storing the first anti-replay attack parameter in the authentication information and/or the data protection key.

In some embodiments, the method further includes transmitting a first response to the authentication entity. The first response includes one or more of the ambient IoT device authentication response and the ambient IoT device nonce.

In some embodiments, the method further includes receiving an ambient IoT device temporary identification information ciphertext transmitted by the authentication entity. The ambient IoT device temporary identification information ciphertext includes ambient IoT device temporary identification information.

In some embodiments, the method further includes receiving group subscription information transmitted by a subscription entity. The group subscription information includes one or more of a group identification information, a second group member identification information, a group key, and a second anti-replay attack parameter.

In a second aspect, an embodiment of the present disclosure provides an ambient IoT device authentication method, performed by an authentication entity. The ambient IoT device authentication method includes: receiving first information transmitted by a subscription entity; and transmitting a first request to an ambient IoT device based on the first information. The first request includes authentication information, the authentication information being generated based on information of an ambient IoT device group to which the ambient IoT device belongs, the ambient IoT device group including one or more ambient IoT devices.

In some embodiments, the first information includes one or more of a first group authentication key, a core network nonce, and a first anti-replay attack parameter.

In some embodiments, the transmitting the first request to the ambient IoT device includes: generating an authentication network element nonce; generating a group member authentication key based on the first group authentication key, first group member identification information, and the authentication network element nonce; generating a network element authentication token based on the group member authentication key; and transmitting the first request to the ambient IoT device. The first request includes the authentication information, the authentication information including one or more of the core network nonce, the authentication network element nonce, the first group member identification information, the network element authentication token, and the first anti-replay attack parameter.

In some embodiments, the method further includes receiving a first response transmitted by the ambient IoT device. The first response includes one or more of an ambient IoT device authentication response and an ambient IoT device nonce.

In some embodiments, the method further includes transmitting an ambient IoT device temporary identification information ciphertext to the ambient IoT device. The ambient IoT device temporary identification information ciphertext includes ambient IoT device temporary identification information.

In some embodiments, the ambient IoT device temporary identification information ciphertext is generated through: generating a data protection key based on the group member authentication key of the authentication entity and the ambient IoT device nonce; verifying the ambient IoT device authentication response based on the data protection key; generating the ambient IoT device temporary identification information in response to a successful verification of the ambient IoT device authentication response; and generating the ambient IoT device temporary identification information ciphertext based on the data protection key and the ambient IoT device temporary identification information.

In a third aspect, an embodiment of the present disclosure provides an ambient IoT device authentication method, performed by a subscription entity. The ambient IoT device authentication method includes transmitting first information to an authentication entity, for transmitting a first request to an ambient IoT device. The first request includes authentication information, the authentication information being generated based on information of an ambient IoT device group to which the ambient IoT device belongs, the ambient IoT device group including one or more ambient IoT devices.

In some embodiments, the method further includes transmitting group subscription information to the ambient IoT device. The group subscription information includes one or more of a group identification information, a second group member identification information, a group key, and a second anti-replay attack parameter.

In some embodiments, the method further includes generating a first group authentication key based on one or more of a group key of the ambient IoT device group to which the ambient IoT device belongs, a core network nonce, or a first anti-replay attack parameter.

In some embodiments, the first information includes one or more of the first group authentication key, the core network nonce, and the first anti-replay attack parameter.

In a fourth aspect, an embodiment of the present disclosure provides an ambient IoT device authentication device, applied in an ambient IoT device. The ambient IoT device authentication device includes a memory, a transceiver, and a processor. The memory is configured to store a computer program. The transceiver is configured to transmit and receive data under control of the processor. The processor is configured to read the computer program in the memory and perform the following steps: receiving a first request transmitted by an authentication entity, wherein the first request includes authentication information, the authentication information being generated based on information of an ambient IoT device group to which the ambient IoT device belongs, the ambient IoT device group including one or more ambient IoT devices; and performing authentication based on the first request.

In some embodiments, the authentication information includes one or more of a core network nonce, an authentication network element nonce, first group member identification information, a network element authentication token, and a first anti-replay attack parameter.

In some embodiments, the processor is further configured to read the computer program in the memory and perform the following steps: verifying the first group member identification information; verifying the network element authentication token based on one or more of a group key stored in the ambient IoT device, the core network nonce, the authentication network element nonce, or the first group member identification information; and generating an ambient IoT device authentication response in response to a successful verification of the first group member identification information and a successful verification of the network element authentication token.

In some embodiments, the processor is further configured to read the computer program in the memory and perform the following steps: verifying a first group authentication key based on the first anti-replay attack parameter and a second anti-replay attack parameter that is stored in the ambient IoT device, wherein the first group authentication key is a group authentication key used by the authentication entity when generating the network element authentication token; and generating the ambient IoT device authentication response in response to the successful verification of the first group member identification information, a successful verification of the first group authentication key, and the successful verification of the network element authentication token.

In some embodiments, the processor is further configured to read the computer program in the memory and perform the following steps: generating a second group authentication key based on the group key and the core network nonce; generating a group member authentication key based on the second group authentication key, the authentication network element nonce, and the first group member identification information; and verifying the network element authentication token based on the group member authentication key.

In some embodiments, the processor is further configured to read the computer program in the memory and perform the following steps: generating an ambient IoT device nonce; generating a data protection key based on the group member authentication key and the ambient IoT device nonce; and generating the ambient IoT device authentication response based on the data protection key.

In some embodiments, the processor is further configured to read the computer program in the memory and perform the following step: storing the first anti-replay attack parameter in the authentication information and/or the data protection key.

In some embodiments, the processor is further configured to read the computer program in the memory and perform the following step: transmitting a first response to the authentication entity. The first response includes one or more of the ambient IoT device authentication response and the ambient IoT device nonce.

In some embodiments, the processor is further configured to read the computer program in the memory and perform the following step: receiving an ambient IoT device temporary identification information ciphertext transmitted by the authentication entity. The ambient IoT device temporary identification information ciphertext includes ambient IoT device temporary identification information.

In some embodiments, the processor is further configured to read the computer program in the memory and perform the following step: receiving group subscription information transmitted by a subscription entity. The group subscription information includes one or more of a group identification information, a second group member identification information, a group key, and a second anti-replay attack parameter.

In a fifth aspect, an embodiment of the present disclosure provides an ambient IoT device authentication device, applied in an authentication entity. The ambient IoT device authentication device includes a memory, a transceiver, and a processor. The memory is configured to store a computer program. The transceiver is configured to transmit and receive data under control of the processor. The processor is configured to read the computer program in the memory and perform the following steps: receiving first information transmitted by a subscription entity; and transmitting a first request to an ambient IoT device based on the first information. The first request includes authentication information, the authentication information being generated based on information of an ambient IoT device group to which the ambient IoT device belongs, the ambient IoT device group including one or more ambient IoT devices.

In some embodiments, the first information includes one or more of a first group authentication key, a core network nonce, and a first anti-replay attack parameter.

In some embodiments, the processor is further configured to read the computer program in the memory and perform the following steps: generating an authentication network element nonce; generating a group member authentication key based on the first group authentication key, first group member identification information, and the authentication network element nonce; generating a network element authentication token based on the group member authentication key; and transmitting the first request to the ambient IoT device. The first request includes the authentication information, the authentication information including one or more of the core network nonce, the authentication network element nonce, the first group member identification information, the network element authentication token, and the first anti-replay attack parameter.

In some embodiments, the processor is further configured to read the computer program in the memory and perform the following step: receiving a first response transmitted by the ambient IoT device. The first response includes one or more of an ambient IoT device authentication response and an ambient IoT device nonce.

In some embodiments, the processor is further configured to read the computer program in the memory and perform the following step: transmitting an ambient IoT device temporary identification information ciphertext to the ambient IoT device. The ambient IoT device temporary identification information ciphertext includes ambient IoT device temporary identification information.

In some embodiments, the processor is further configured to read the computer program in the memory and perform the following steps: generating a data protection key based on the group member authentication key of the authentication entity and the ambient IoT device nonce; verifying the ambient IoT device authentication response based on the data protection key; generating the ambient IoT device temporary identification information in response to a successful verification of the ambient IoT device authentication response; and generating the ambient IoT device temporary identification information ciphertext based on the data protection key and the ambient IoT device temporary identification information.

In a sixth aspect, an embodiment of the present disclosure provides an ambient IoT device authentication device, applied in a subscription entity. The ambient IoT device authentication device includes a memory, a transceiver, and a processor. The memory is configured to store a computer program. The transceiver is configured to transmit and receive data under control of the processor. The processor is configured to read the computer program in the memory and perform the following step: transmitting first information to an authentication entity, for transmitting a first request to an ambient IoT device. The first request includes authentication information, the authentication information being generated based on information of an ambient IoT device group to which the ambient IoT device belongs, the ambient IoT device group including one or more ambient IoT devices.

In some embodiments, the processor is further configured to read the computer program and perform the following step: transmitting group subscription information to the ambient IoT device. The group subscription information includes one or more of a group identification information, a second group member identification information, a group key, and a second anti-replay attack parameter.

In some embodiments, the processor is further configured to read the computer program and perform the following step: generating a first group authentication key based on one or more of a group key of the ambient IoT device group to which the ambient IoT device belongs, a core network nonce, or a first anti-replay attack parameter.

In some embodiments, the first information includes one or more of the first group authentication key, the core network nonce, and the first anti-replay attack parameter.

In a seventh aspect, an embodiment of the present disclosure provides an ambient IoT device authentication device, applied in an ambient IoT device. The ambient IoT device authentication device includes: a first receiving unit configured to receive a first request transmitted by an authentication entity, wherein the first request includes authentication information, the authentication information being generated based on information of an ambient IoT device group to which the ambient IoT device belongs, the ambient IoT device group including one or more ambient IoT devices; and a first authentication unit configured to perform authentication based on the first request.

In an eighth aspect, an embodiment of the present disclosure provides an ambient IoT device authentication device, applied in an authentication entity. The ambient IoT device authentication device includes: a first receiving unit configured to receive first information transmitted by a subscription entity; and a first transmitting unit configured to transmit a first request to an ambient IoT device based on the first information. The first request includes authentication information, the authentication information being generated based on information of an ambient IoT device group to which the ambient IoT device belongs, the ambient IoT device group including one or more ambient IoT devices.

In a ninth aspect, an embodiment of the present disclosure provides an ambient IoT device authentication device, applied in a subscription entity. The ambient IoT device authentication device includes a first transmitting unit configured to transmit first information to an authentication entity, for transmitting a first request to an ambient IoT device. The first request includes authentication information, the authentication information being generated based on information of an ambient IoT device group to which the ambient IoT device belongs, the ambient IoT device group including one or more ambient IoT devices.

In a tenth aspect, an embodiment of the present disclosure further provides a processor-readable storage medium having a computer program stored thereon. The computer program, when executed by a processor, implements the steps of the ambient IoT device authentication method as described above.

In an eleventh aspect, an embodiment of the present disclosure further provides a computer program product, including computer instructions. The computer instructions, when executed by a processor, implement the steps of the ambient IoT device authentication method as described above.

In the embodiments of the present disclosure, the ambient IoT device receives the first request transmitted by the authentication entity and performs the authentication based on the first request, thereby realizing the authentication of the ambient IoT device.

### BRIEF DESCRIPTION OF THE DRAWINGS

FIG. 1 is a first flowchart of a tag authentication method according to an embodiment of the present disclosure;
FIG. 2 is a schematic diagram of a system according to an embodiment of the present disclosure;
FIG. 3 is a second flowchart of a tag authentication method according to an embodiment of the present disclosure;
FIG. 4 is a third flowchart of a tag authentication method according to an embodiment of the present disclosure;
FIG. 5 is a fourth flowchart of a tag authentication method according to an embodiment of the present disclosure;
FIG. 6 is a first structural diagram of a tag authentication device according to an embodiment of the present disclosure;
FIG. 7 is a second structural diagram of a tag authentication device according to an embodiment of the present disclosure;
FIG. 8 is a third structural diagram of a tag authentication device according to an embodiment of the present disclosure;
FIG. 9 is a fourth structural diagram of a tag authentication device according to an embodiment of the present disclosure;
FIG. 10 is a fifth structural diagram of a tag authentication device according to an embodiment of the present disclosure; and
FIG. 11 is a sixth structural diagram of a tag authentication device according to an embodiment of the present disclosure.

### DETAILED DESCRIPTION

In embodiments of the present disclosure, the term "a plurality of" refers to two or more, and other quantifiers are similar thereto.

Technical solutions according to the embodiments of the present disclosure will be described clearly and thoroughly below in combination with accompanying drawings of the embodiments of the present disclosure. Obviously, the embodiments described below are only a part of the embodiments of the present disclosure, rather than all of the embodiments. On a basis of the embodiments in the present disclosure, all other embodiments obtained by a person skilled in the art without creative labor shall fall within the scope of the present disclosure.

Embodiments of the present disclosure provide a tag authentication method and a tag authentication device, to implement authentication of a tag.

The tag authentication method and the tag authentication device are based on the same inventive concept. Since the principle of the tag authentication device for solving the technical problem is similar to that of the tag authentication method, the implementations of the tag authentication device and the tag authentication method may be referred to each other, and details that are the same will not be elaborated.

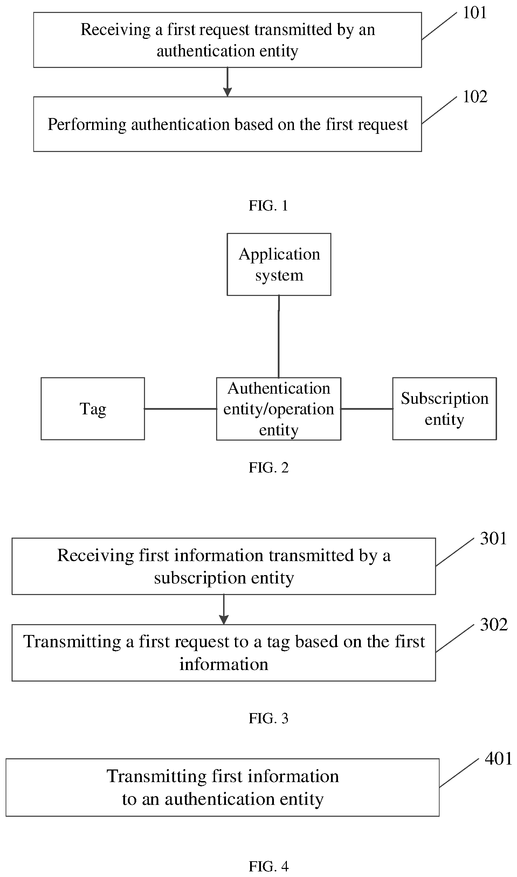

Referring to FIG. 1, FIG. 1 is a flowchart of a tag authentication method according to an embodiment of the present disclosure. The tag authentication method is performed by a tag. As illustrated in FIG. 1, the tag authentication method includes the following steps 101 and 102.

At step 101, a first request transmitted by an authentication entity is received. The first request includes authentication information. The authentication information is generated based on information of a tag group to which the tag belongs. The tag group includes one or more tags.

In the embodiment of the present disclosure, the tag may also be referred to as an ambient IoT device, a User Equipment (UE), a terminal, or the like.

IoT connections are characterized by a huge number of connected devices and similar device attributes, making them suitable for management using the concept of group. For example, tags belonging to the same customer and having the same Quality of Service (QoS) and policy may be organized into the same group, thereby greatly reducing similar subscription information.

As illustrated in FIG. 2, FIG. 2 is a schematic diagram of a system architecture according to an embodiment of the present disclosure. The system may include a tag, an application system, an authentication entity/operation entity, and a subscription entity.

Tag: an IoT device or an active or ambient tag attached to an IoT device. Security-related data and operations are implemented in a security module of the tag to implement a security premise and security logic.

Subscription entity: an entity that stores group subscription data. In a 3GPP core network, the subscription entity may be implemented by a Home Subscriber Server (HSS) of the 4th Generation mobile communication technology (4G) or a Unified Data Management (UDM) of the 5th Generation mobile communication technology (5G).

Authentication entity/operation entity: an entity that interacts with tags to implement authentication of the tags and perform security operations on the tags. In a 3GPP system, the authentication entity/operation entity may be implemented by an evolved Node B (Node B, eNB) or Mobility Management Entity (MME) of the 4G, or a New Radio (NR) node (NR Node B, gNB) or Access and Mobility Management Function (AMF) / Security Anchor Function (SEAF) / Authentication Server Function (AUSF) of the 5G.

Application system: an IoT application system. In a 3GPP system, the application system may interact with the authentication entity/operation entity via a Network Exposure Function (NEF) or User Plane Function (UPF), and interact with an IoT device.

In this step, the authentication information is generated based on the information of the tag group to which the tag belongs. It can be understood that the authentication information for a certain tag may be generated based on the information of the tag group to which the tag belongs. The information of the tag group includes, but not limited to, a group identification information, a group member identification information, or the like.

In the embodiment of the present disclosure, the authentication information includes one or more of: a core network nonce, which may be understood as a value used only once, such as a random number; an authentication network element nonce, which may be understood as a value used only once, such as a random number; first group member identification information (ID); a network element authentication token; and a first anti-replay attack parameter, which may be understood as a value that changes sequentially according to a rule.

At step 102, authentication is performed based on the first request.

During the authentication process, the tag may perform the authentication in the following manner.

(1) The first group member identification information is verified.

The tag locally stores a group member identification information. Therefore, the tag may compare the locally stored group member identification information with the first group member identification information. When the two are consistent, it may be considered that a verification of the first group member identification information succeeds; otherwise, it is considered that the verification of the first group member identification information fails.

(2) The network element authentication token is verified based on one or more of a group key stored in the tag, the core network nonce, the authentication network element nonce, or the first group member identification information.

When verifying the network element authentication token, a verification may be performed based on one or more of the group key stored in the tag, the core network nonce, the authentication network element nonce, or the first group member identification information.

For example, a second group authentication key may be generated based on the group key and the core network nonce. A group member authentication key is generated based on the second group authentication key, the authentication network element nonce, and the first group member identification information. The network element authentication token is verified based on the group member authentication key.

In some embodiments, during the process of generating the second group authentication key, the second group authentication key may be generated based further on the first anti-replay attack parameter. When verifying the network element authentication token based on the group member authentication key, in some embodiments, the verification may be performed based further on relevant parameters. The relevant parameters may be, for example, an authentication device identification information. In response to a successful verification, it is considered that the authentication entity possesses the second group authentication key.

For another example, the network element authentication token may further be verified based on only one of the group key stored in the tag, the core network nonce, the authentication network element nonce, and the first group member identification information. For example, the network element authentication token may be verified based on the group key stored in the tag, for instance, the network element authentication token is decrypted by using the group key stored in the tag. If the decryption succeeds, the verification of the network element authentication token succeeds, otherwise, the verification fails.

There is no strict sequential order between the above (1) and (2).

(3) A tag authentication response is generated in response to the successful verification of the first group member identification information and the successful verification of the network element authentication token.

In some embodiments, in order to further enhance security, the tag may further verify a first group authentication key based on the first anti-replay attack parameter and a second anti-replay attack parameter that is stored in the tag. The first group authentication key is a group authentication key used by the authentication entity when generating the network element authentication token. The second anti-replay attack parameter may be obtained from a subscription entity. When the first anti-replay attack parameter matches the second anti-replay attack parameter, it is determined that the first group authentication key has not expired, otherwise, it may be considered that the first group authentication key has expired. For example, when the first anti-replay attack parameter and the second anti-replay attack parameter are random numbers increasing in sequence, and the value of the first anti-replay attack parameter is less than the value of the second anti-replay attack parameter, it is determined that the first group authentication key has not expired; otherwise, it may be considered that the first group authentication key has expired.

Accordingly, in this step, the tag authentication response is generated in response to the successful verification of the first group member identification information, the verification of the first group authentication key being passed, and the successful verification of the network element authentication token.

During the process of generating the tag authentication response, a tag nonce is generated. A data protection key is generated based on the group member authentication key and the tag nonce. Thereafter, the tag authentication response is generated based on the data protection key.

In some embodiments, the tag may further store the first anti-replay attack parameter in the authentication information and/or the data protection key.

It can be seen from the above description that, in the embodiments of the present disclosure, the tag receives the first request transmitted by the authentication entity and performs the authentication based on the first request, thereby realizing the authentication of the tag.

Based on the above embodiments, the tag may further transmit a first response to the authentication entity. The first response includes one or more of the tag authentication response and the tag nonce.

Based on the above embodiments, the tag may further receive a tag temporary identification information ciphertext transmitted by the authentication entity. The tag temporary identification information ciphertext includes a tag temporary identification information (ID).

Thereafter, the tag may use the tag temporary ID and the data protection key to protect interaction data.

In some embodiments, the tag may further receive group subscription information transmitted by the subscription entity. The group subscription information includes one or more of a group identification information, a second group member identification information, a group key, and a second anti-replay attack parameter. The group key is used for generating a group authentication key. A group member authentication key may be derived based on the group authentication key and a group member identification information. The second anti-replay attack parameter is a value that changes sequentially according to a rule, which may be used in the generation of the group authentication key. The tag uses this value to determine whether a certain group authentication key has been used.

Referring to FIG. 3, FIG. 3 is a flowchart of a tag authentication method according to an embodiment of the present disclosure. The tag authentication method is performed by an authentication entity. As illustrated in FIG. 3, the tag authentication method includes the following steps 301 and 302.

At step 301, first information transmitted by a subscription entity is received.

The first information includes one or more of a first group authentication key, a core network nonce, and a first anti-replay attack parameter.

For the explanation of the core network nonce and the first anti-replay attack parameter, reference may be made to the description of the method embodiments as described above.

At step 302, a first request is transmitted to a tag based on the first information. The first request includes authentication information. The authentication information is generated based on information of a tag group to which the tag belongs. The tag group includes one or more tags.

In this step, the authentication entity generates an authentication network element nonce, generates a group member authentication key based on the first group authentication key, first group member identification information (which may be provided by a core network or an external application system), and the authentication network element nonce, and generates a network element authentication token based on the group member authentication key. Subsequently, the authentication entity transmits the first request to the tag. The authentication information includes one or more of the core network nonce, the authentication network element nonce, the first group member identification information, the network element authentication token, and the first anti-replay attack parameter.

When generating the group member authentication key, other parameters may also serve as a basis, e.g., an identifier of the authentication entity, etc.

In the embodiment of the present disclosure, the tag receives the first request transmitted by the authentication entity and performs authentication based on the first request, thereby realizing the authentication of the tag.

In some embodiments, the authentication entity may further receive a first response transmitted by the tag. The first response includes one or more of a tag authentication response and a tag nonce.

In some embodiments, the authentication entity may further transmit a tag temporary identification information ciphertext to the tag. The tag temporary identification information ciphertext includes a tag temporary identification information.

The tag temporary identification information ciphertext is generated in the following manner.

A data protection key is generated based on the group member authentication key of the authentication entity and the tag nonce. The tag authentication response is verified based on the data protection key. A tag temporary identification information is generated in response to a successful verification of the tag authentication response. The tag temporary identification information ciphertext is generated based on the data protection key and the tag temporary identification information.

Referring to FIG. 4, FIG. 4 is a flowchart of a tag authentication method according to an embodiment of the present disclosure. The tag authentication method is performed by a subscription entity. As illustrated in FIG. 4, the tag authentication method includes the following step 401.

At step 401, first information is transmitted to an authentication entity, for transmitting a first request to a tag. The first request includes authentication information. The authentication information is generated based on information of a tag group to which the tag belongs. The tag group includes one or more tags.

In some embodiments, the subscription entity may further generate a first group authentication key based on one or more of a group key of the tag group to which the tag belongs, a core network nonce, or a first anti-replay attack parameter.

The first information includes one or more of the first group authentication key, the core network nonce, and the first anti-replay attack parameter.

In the embodiment of the present disclosure, the tag receives the first request transmitted by the authentication entity and performs authentication based on the first request, thereby realizing the authentication of the tag.

In some embodiments, the subscription entity may further transmit group subscription information to the tag. The group subscription information includes one or more of a group identification information, a second group member identification information, a group key, and a second anti-replay attack parameter.

The implementation process of the embodiments of the present disclosure is described in detail below.

In the system illustrated in FIG. 2, IoT devices with similar attributes are organized into the same group, and subscription information is managed on a group basis. The grouping may also be implemented based on the Electronic Product Code (EPC). For example, all tags with a manufacturer identification code of A in the EPC tag may be grouped into one group, or all tags with a batch number of B in the EPC tag may be grouped into one group, and the EPC is used as the group member identification information.

The tag is uniquely identified by a group identification information and a group member identification information. The tag stores the group identification information (e.g., a User Equipment (UE) identifier), a device identification information (group member identification information), and a group key.

The subscription entity randomly generates a group authentication key based on the group key and the like, and provides the group authentication key to the authentication entity.

The authentication entity generates a tag authentication key based on the group authentication key and the device identification information.

After the authentication entity successfully authenticating the tag, the authentication entity assigns a temporary identification information to the tag, and the temporary identification information is bound to a data protection key generated during the authentication process. Thereafter, the operation entity and the tag use the temporary identification information and the data protection key for secure communication over the air interface.

In the tag, security (authentication) data and security (authentication) operations are both stored and executed in a tag security module, which can prevent illegal tampering with critical data, thereby ensuring the trustworthiness and security of the entire system.

Through the above manner, the quantity of tag subscription information to be stored in the core network can be effectively reduced.

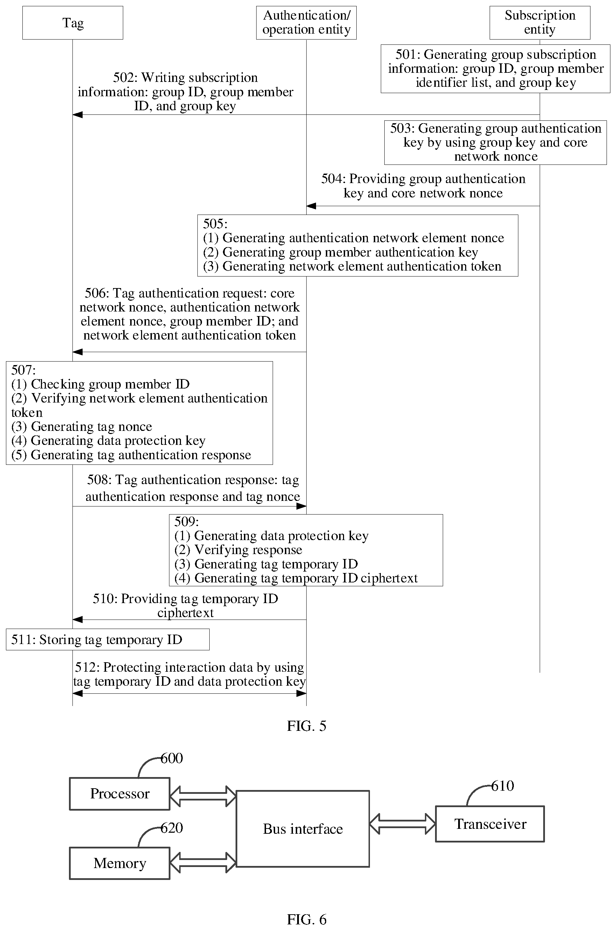

Referring to FIG. 5, FIG. 5 is a schematic diagram showing a processing procedure according to an embodiment of the present disclosure. The processing procedure may include the following steps 501 to 512.

At step 501, a subscription entity (e.g., a UDM) generates group subscription information. The group subscription information includes: a group ID (UE-ID); a group key; a group member identifier list (optional); and an anti-replay attack initial parameter (optional). The group key is used for generating a group authentication key. A group member authentication key may be derived based on the group authentication key and a group member identification information. The anti-replay attack initial parameter is a value that changes sequentially according to a rule, which may be used in the generation of the group authentication key, and the tag uses this value to determine whether a certain group authentication key has been used.

At step 502, during tag initialization, the subscription entity (core network) writes the following information into a security module (Universal Subscriber Identity Module, USIM) of the tag: the group ID; the group member ID; the group key; and the anti-replay attack initial parameter (optional).

At step 503, the subscription entity generates the group authentication key by using the group key, a core network nonce, and an anti-replay attack parameter (optional). The core network nonce is a value generated for dynamically generating the group authentication key, and this value is used only once (e.g., a random number). The anti-replay attack parameter is a value that changes according to a rule and is used only once.

At step 504, the subscription entity provides the group authentication key, the core network nonce, and the anti-replay attack parameter (optional) to the authentication entity.

At step 505, the authentication entity performs the following operations to authenticate a specific tag.
(1) An authentication network element nonce is generated.
(2) A group member authentication key is generated by using the group authentication key, the group member ID (which may be provided by a core network or an external application system), and the authentication network element nonce and/or other parameters (for example, an identifier of the authentication entity).
(3) A network element authentication token is generated, which is a security credential used for the tag to authenticate the authentication entity and may be generated based on a group member authentication key and related parameters.

At step 506, the authentication entity transmits an authentication request to the tag, and provides the following parameters to the tag: the core network nonce; the anti-replay attack parameter (optional); the authentication network element nonce; the group member ID; and the network element authentication token.

At step 507, subsequent to receiving the tag authentication request transmitted by the authentication entity, the tag performs the following operations.
(1) It is verified whether the group member ID in the authentication request is consistent with a group member ID stored in the tag. If consistent, the subsequent operations are performed.
(2) An anti-replay attack parameter stored locally is compared with the received anti-replay attack parameter to determine whether the group authentication key has expired. If not expired, the subsequent operations are performed (optional).

The group authentication key is generated by using the group key, and the received core network nonce and anti-replay attack parameter (optional).

The group member authentication key is generated by using the generated group authentication key, and the received group member ID and authentication network element nonce.

The network element authentication token is verified by using the group member authentication key and the related parameters (e.g., an authentication entity ID). If the verification succeeds, it is proved that the authentication entity possesses the group authentication key, and then the subsequent operations are performed.

(3) A tag nonce is generated.

(4) A data protection key is generated by using the group member authentication key and the tag nonce.

(5) A tag authentication response is generated by using the data protection key and the related parameters.

In some embodiments, the tag may further store the data protection key and the anti-replay attack parameter received at step 506.

At step 508, the tag transmits a tag authentication response to the authentication entity. The tag authentication response includes a tag authentication response and a tag nonce.

At step 509, subsequent to receiving the tag authentication response transmitted by the tag, the authentication entity performs the following operations.
(1) The data protection key is generated by using the group member authentication key and the tag nonce.
(2) The tag authentication response is verified by using the data protection key and related parameters.
(3) After the authentication of the tag succeeds, a tag temporary ID is generated for the tag.
(4) A tag temporary ID ciphertext (confidentiality protection and/or integrity protection) is generated by using the data protection key.

If the authentication entity and the operation entity are not the same entity, the authentication entity may provide the tag temporary ID and the data protection key to the operation entity.

At step 510, the authentication entity provides the tag temporary ID ciphertext to the tag. The tag temporary ID ciphertext includes the tag temporary ID.

At step 511, the tag stores the tag temporary ID.

At step 512, interaction data is protected by using the tag temporary ID and the data protection key.

It can be seen from the above description that, in the embodiments of the present disclosure, the concept of grouping is adopted to organize tags having commonalities into the same group, and the generated subscription information is directed to the group. In this way, the core network only needs to store the subscription information and the group member information of the group, thereby greatly reducing the quantity of the subscription information of the tags.

The technical solutions according to the embodiments of the present disclosure can be applied to various systems, especially a 5G System. For example, the applicable systems may be a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), a Worldwide Interoperability for Microwave Access (WiMAX) system, a 5G New Radio (NR) system, etc. These systems each includes a terminal device and a network device. The system may also include a core network, such as an Evolved Packet System (EPS), a 5G System (5GS), and the like.

The terminal device according to the embodiments of the present disclosure may be a device providing voice and/or data connectivity to a user, a handheld device having a wireless connection function, or other processing device connected to a wireless modem, etc. In different systems, the names of terminal devices may be different. For example, in a 5G system, a terminal device may be called a User Equipment (UE). The wireless terminal device may communicate with one or more Core Networks (CN) via a Radio Access Network (RAN). The wireless terminal device may be a mobile terminal device, such as a mobile telephone (or "cellular" telephone), or a computer having a mobile terminal device, such as a portable, pocket-sized, hand-held, computer-built, or vehicle-mounted mobile device, which exchanges language and/or data with the RAN. For example, a Personal Communication Service (PCS) telephone, a cordless telephone, a Session Initiated Protocol (SIP) telephone, a Wireless Local Loop (WLL) station, a Personal Digital Assistant (PDA), and the like. The wireless terminal device may also be referred to as a system, a subscriber unit, a subscriber station, a mobile station, a mobile platform, a remote station, an access point, a remote terminal, an access terminal, a user terminal, a user agent, and a user device, which is not limited in the embodiments of the present disclosure.

The network device according to the embodiments of the present disclosure may be a base station, and the base station may include a plurality of cells providing services for terminals. Depending on the specific application, the base station may also be referred to as an access point, or may be a device in an access network that communicates with a wireless terminal device through one or more sectors on an air interface, or other names. The network device may be used to interchange received over-the-air frames with Internet Protocol (IP) packets, acting as a router between the wireless terminal device and the rest of the access network, where the rest of the access network may include an IP communication network. The network device can also coordinate the attribute management of the air interface. For example, the network device according to the embodiments of the present disclosure may be a Base Transceiver Station (BTS) in a Global System for Mobile communications (GSM) system or a Code Division Multiple Access (CDMA) system, a network device such as NodeB in a Wide-band Code Division Multiple Access (WCDMA) system, an evolutional Node B (eNB or e-NodeB) in a Long Term Evolution (LTE) system, or a 5G base station (gNB) in a 5G next generation system. The network device may also be a Home Evolved Node B (HeNB), a relay node, a femto, a pico, and the like, which is not limited in the embodiments of the present disclosure. In some network architectures, the network device may include centralized unit (CU) nodes and distributed unit (DU) nodes, which may also be geographically separated.

The network device and the terminal device may each use one or more antennas to perform Multi Input Multi Output (MIMO) transmission. The MIMO transmission may be Single User MIMO (SU-MIMO) or Multiple User MIMO (MU-MIMO). According to the morphology and quantity of antenna combinations, MIMO transmission can be 2-Dimension MIMO (2D-MIMO), 3-Dimension MIMO (3D-MIMO), Full Dimension MIMO (FD-MIMO), or Massive MIMO, and can also be diversity transmission, precoding transmission, or beamforming transmission, etc..

As illustrated in FIG. 6, a tag authentication device according to an embodiment of the present disclosure is provided. The tag authentication device is applied in an authentication entity. The tag authentication device includes a processor 600. The processor 600 is configured to read a program in a memory 620 to execute the following processes.

First information transmitted by a subscription entity is received.

A first request is transmitted to a tag based on the first information. The first request includes authentication information. The authentication information is generated based on information of a tag group to which the tag belongs. The tag group includes one or more tags.

A transceiver 610 is configured to receive and transmit data under control of the processor 600.

In FIG. 6, the bus architecture may include any number of interconnected buses and bridges, which are specifically linked together by various circuits including one or more processors represented by the processor 600 and a memory represented by the memory 620. The bus architecture may also link together a variety of other circuits such as a peripheral, a voltage regulator, and a power management circuit, which are well known in the art and therefore will not be further described herein. The bus interface provides the interface. The transceiver 610 may be a plurality of elements, i.e. including a transmitter and a receiver, providing a unit for communicating with various other devices over a transmission medium. The processor 600 is responsible for managing the bus architecture and general processing, and the memory 620 may store data used by the processor 600 in performing operations.

The processor 600 may be a Central Processing Unit (CPU), an Application Specific Integrated Circuit (ASIC), a Field-Programmable Gate Array (FPGA), or a Complex Programmable Logic Device (CPLD), and the processor may also employ a multi-core architecture.

The processor 600 is responsible for managing the bus architecture and general processing, and the memory 620 may store data used by the processor 600 in performing operations.

In some embodiments, the first information includes one or more of a first group authentication key, a core network nonce, and a first anti-replay attack parameter.

The processor 600 is further configured to read the program and perform the following steps: generating an authentication network element nonce; generating a group member authentication key based on the first group authentication key, first group member identification information, and the authentication network element nonce; generating a network element authentication token based on the group member authentication key; and transmitting the first request to the tag. The first request includes the authentication information. The authentication information includes one or more of the core network nonce, the authentication network element nonce, the first group member identification information, the network element authentication token, and the first anti-replay attack parameter.

The processor 600 is further configured to read the program and perform the following step: receiving a first response transmitted by the tag. The first response includes one or more of a tag authentication response and a tag nonce.

The processor 600 is further configured to read the program and perform the following step: transmitting a tag temporary identification information ciphertext to the tag. The tag temporary identification information ciphertext includes a tag temporary identification information.

The processor 600 is further configured to read the program and perform the following steps: generating a data protection key based on the group member authentication key of the authentication entity and the tag nonce; verifying the tag authentication response based on the data protection key; generating a tag temporary identification information in response to a successful verification of the tag authentication response; and generating the tag temporary identification information ciphertext based on the data protection key and the tag temporary identification information.

It should be noted that the tag authentication device according to the embodiment of the present disclosure can realize all the method steps realized by the method embodiment and can achieve the same technical effect, and the parts and beneficial effects which are the same as those of the method embodiment in the present embodiment will not be detailed herein.

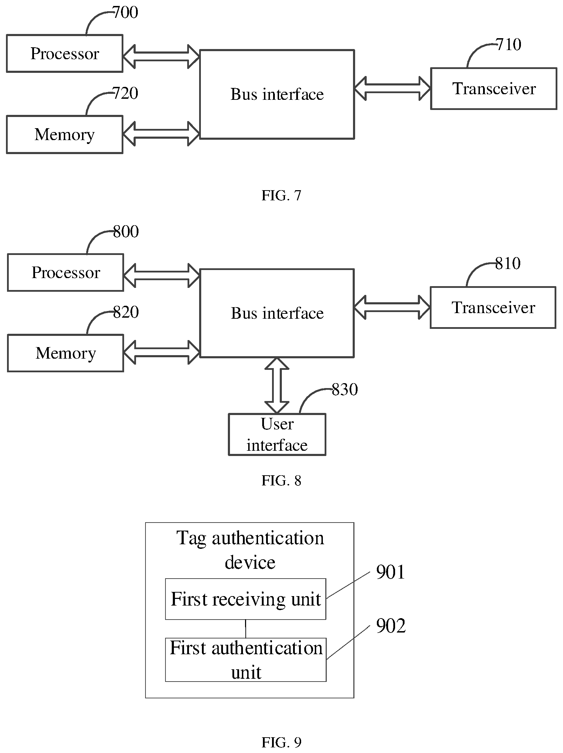

As illustrated in FIG. 7, a tag authentication device according to an embodiment of the present disclosure is provided. The tag authentication device is applied in a subscription entity. The tag authentication device includes a processor 700. The processor 700 is configured to read a program in a memory 720 to execute the following processes.

First information is transmitted to an authentication entity, for transmitting a first request to a tag. The first request includes authentication information. The authentication information is generated based on information of a tag group to which the tag belongs. The tag group includes one or more tags.

A transceiver 710 is configured to receive and transmit data under control of the processor 700.

In FIG. 7, the bus architecture may include any number of interconnected buses and bridges, which are specifically linked together by various circuits including one or more processors represented by the processor 700 and a memory represented by the memory 720. The bus architecture may also link together a variety of other circuits such as a peripheral, a voltage regulator, and a power management circuit, which are well known in the art and therefore will not be further described herein. The bus interface provides the interface. The transceiver 710 may be a plurality of elements, i.e. including a transmitter and a receiver, providing a unit for communicating with various other devices over a transmission medium. The processor 700 is responsible for managing the bus architecture and general processing, and the memory 720 may store data used by the processor 700 in performing operations.

The processor 700 may be a Central Processing Unit (CPU), an Application Specific Integrated Circuit (ASIC), a Field-Programmable Gate Array (FPGA), or a Complex Programmable Logic Device (CPLD), and the processor may also employ a multi-core architecture.

The processor 700 is responsible for managing the bus architecture and general processing, and the memory 720 may store data used by the processor 700 in performing operations.

The processor 700 is further configured to read the program and perform the following step: transmitting group subscription information to the tag. The group subscription information includes one or more of a group identification information, a second group member identification information, a group key, and a second anti-replay attack parameter.

The processor 700 is further configured to read the program and perform the following step: generating a first group authentication key based on one or more of a group key of the tag group to which the tag belongs, a core network nonce, or a first anti-replay attack parameter.

In some embodiments, the first information includes one or more of the first group authentication key, the core network nonce, and the first anti-replay attack parameter.

It should be noted that the tag authentication device according to the embodiment of the present disclosure can realize all the method steps realized by the method embodiment and can achieve the same technical effect, and the parts and beneficial effects which are the same as those of the method embodiment in the present embodiment will not be detailed herein.

As illustrated in FIG. 8, a tag authentication device according to an embodiment of the present disclosure is provided. The tag authentication device is applied in a tag. The tag authentication device includes a processor 800. The processor 800 is configured to read a program in a memory 820 and execute the following processes.

A first request transmitted by an authentication entity is received. The first request includes authentication information. The authentication information is generated based on information of a tag group to which the tag belongs. The tag group includes one or more tags.

Authentication is performed based on the first request.

A transceiver 810 is configured to receive and transmit data under control of the processor 800.

In FIG. 8, the bus architecture may include any number of interconnected buses and bridges, which are specifically linked together by various circuits including one or more processors represented by the processor 800 and a memory represented by the memory 820. The bus architecture may also link together a variety of other circuits such as a peripheral, a voltage regulator, and a power management circuit, which are well known in the art and therefore will not be further described herein. The bus interface provides the interface. The transceiver 810 may be a plurality of elements, i.e. including a transmitter and a receiver, providing a unit for communicating with various other devices over a transmission medium. For different UEs, the user interface 830 may further be an interface capable of externally or internally connecting the required devices including but not limited to a keypad, a display, a speaker, a microphone, a joystick, etc.

The processor 800 is responsible for managing the bus architecture and general processing, and the memory 820 may store data used by the processor 800 in performing operations.

The processor 800 may be a Central Processing Unit (CPU), an Application Specific Integrated Circuit (ASIC), a Field-Programmable Gate Array (FPGA), or a Complex Programmable Logic Device (CPLD), and the processor may also employ a multi-core architecture.

The processor, by invoking a computer program stored in the memory, is configured to implement any of the methods according to the embodiments of the present disclosure in accordance with the obtained executable instructions. The processor and the memory may also be physically arranged separately.

In some embodiments, the authentication information includes one or more of a core network nonce, an authentication network element nonce, first group member identification information, a network element authentication token, and a first anti-replay attack parameter.

The processor 800 is further configured to read the program and perform the following steps: verifying the first group member identification information; verifying the network element authentication token based on one or more of a group key stored in the tag, the core network nonce, the authentication network element nonce, or the first group member identification information; and generating a tag authentication response in response to a successful verification of the first group member identification information and a successful verification of the network element authentication token.

The processor 800 is further configured to read the program and perform the following steps: verifying a first group authentication key based on the first anti-replay attack parameter and a second anti-replay attack parameter that is stored in the tag, wherein the first group authentication key is a group authentication key used by the authentication entity when generating the network element authentication token; and generating the tag authentication response in response to the successful verification of the first group member identification information, a successful verification of the first group authentication key, and the successful verification of the network element authentication token.

The processor 800 is further configured to read the program and perform the following steps: generating a second group authentication key based on the group key and the core network nonce; generating a group member authentication key based on the second group authentication key, the authentication network element nonce, and the first group member identification information; and verifying the network element authentication token based on the group member authentication key.

The processor 800 is further configured to read the program and perform the following steps: generating a tag nonce; generating a data protection key based on the group member authentication key and the tag nonce; and generating the tag authentication response based on the data protection key.

The processor 800 is further configured to read the program and perform the following step: storing the first anti-replay attack parameter in the authentication information and/or the data protection key.

The processor 800 is further configured to read the program and perform the following step: transmitting a first response to the authentication entity. The first response includes one or more of the tag authentication response and the tag nonce.

The processor 800 is further configured to read the program and perform the following step: receiving a tag temporary identification information ciphertext transmitted by the authentication entity. The tag temporary identification information ciphertext includes a tag temporary identification information.

The processor 800 is further configured to read the program and perform the following step: receiving group subscription information transmitted by a subscription entity. The group subscription information includes one or more of a group identification information, a second group member identification information, a group key, and a second anti-replay attack parameter.

It should be noted that the tag authentication device according to the embodiment of the present disclosure can realize all the method steps realized by the method embodiment and can achieve the same technical effect, and the parts and beneficial effects which are the same as those of the method embodiment in the present embodiment will not be detailed herein.

As illustrated in FIG. 9, a tag authentication device according to an embodiment of the present disclosure is provided. The tag authentication device is applied in a tag. The tag authentication device includes: a first receiving unit 901 configured to receive a first request transmitted by an authentication entity, wherein the first request includes authentication information, the authentication information being generated based on information of a tag group to which the tag belongs, the tag group including one or more tags; and a first authentication unit 902 configured to perform authentication based on the first request.

The authentication information includes one or more of a core network nonce, an authentication network element nonce, first group member identification information, a network element authentication token, and a first anti-replay attack parameter.

In some embodiments, the first authentication unit 902 may include: a first verification subunit configured to verify the first group member identification information; a second verification subunit configured to verify the network element authentication token based on one or more of a group key stored in the tag, the core network nonce, the authentication network element nonce, or the first group member identification information; and a first generation subunit configured to generate a tag authentication response in response to a successful verification of the first group member identification information and a successful verification of the network element authentication token.

In some embodiments, the first authentication unit 902 may further include a third verification subunit configured to verify a first group authentication key based on the first anti-replay attack parameter and a second anti-replay attack parameter that is stored in the tag. The first group authentication key is a group authentication key used by the authentication entity when generating the network element authentication token.

The first generation subunit is further configured to generate the tag authentication response in response to the successful verification of the first group member identification information, a successful verification of the first group authentication key, and the successful verification of the network element authentication token.

In some embodiments, the second verification subunit is further configured to: generate a second group authentication key based on the group key and the core network nonce; generate a group member authentication key based on the second group authentication key, the authentication network element nonce, and the first group member identification information; and verify the network element authentication token based on the group member authentication key.

In some embodiments, the first generation subunit is further configured to: generate a tag nonce; generate a data protection key based on the group member authentication key and the tag nonce; and generate the tag authentication response based on the data protection key.

In some embodiments, the tag authentication device may further include a storage unit configured to store the first anti-replay attack parameter in the authentication information and/or the data protection key.

In some embodiments, the tag authentication device may further include a first transmitting unit configured to transmit a first response to the authentication entity. The first response includes one or more of the tag authentication response and the tag nonce.

In some embodiments, the tag authentication device may further include a second receiving unit configured to receive a tag temporary identification information ciphertext transmitted by the authentication entity. The tag temporary identification information ciphertext includes a tag temporary identification information.

In some embodiments, the tag authentication device may further include a third receiving unit configured to receive group subscription information transmitted by a subscription entity. The group subscription information includes one or more of a group identification information, a second group member identification information, a group key, and a second anti-replay attack parameter.

It should be noted that the tag authentication device according to the embodiment of the present disclosure can realize all the method steps realized by the method embodiment and can achieve the same technical effect, and the parts and beneficial effects which are the same as those of the method embodiment in the present embodiment will not be detailed herein.

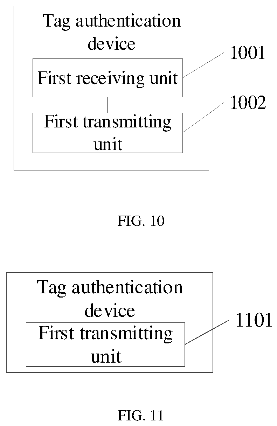

As illustrated in FIG. 10, a tag authentication device according to an embodiment of the present disclosure is provided. The tag authentication device is applied in an authentication entity. The tag authentication device includes: a first receiving unit 1001 configured to receive first information transmitted by a subscription entity; and a first transmitting unit 1002 configured to transmit a first request to a tag based on the first information. The first request includes authentication information. The authentication information is generated based on information of a tag group to which the tag belongs. The tag group including one or more tags.

The first information includes one or more of a first group authentication key, a core network nonce, and a first anti-replay attack parameter.

In some embodiments, the first transmitting unit 1002 is further configured to: generate an authentication network element nonce; generate a group member authentication key based on the first group authentication key, first group member identification information, and the authentication network element nonce; generate a network element authentication token based on the group member authentication key; and transmit the first request to the tag. The first request includes the authentication information. The authentication information includes one or more of the core network nonce, the authentication network element nonce, the first group member identification information, the network element authentication token, and the first anti-replay attack parameter.

In some embodiments, the tag authentication device may further include a second receiving unit configured to receive a first response transmitted by the tag. The first response includes one or more of a tag authentication response and a tag nonce.

In some embodiments, the tag authentication device may further include a second transmitting unit configured to transmit a tag temporary identification information ciphertext to the tag. The tag temporary identification information ciphertext includes a tag temporary identification information.

In some embodiments, the tag temporary identification information ciphertext is generated in the following manner: generating a data protection key based on the group member authentication key of the authentication entity and the tag nonce; verifying the tag authentication response based on the data protection key; generating a tag temporary identification information in response to a successful verification of the tag authentication response; and generating the tag temporary identification information ciphertext based on the data protection key and the tag temporary identification information.

It should be noted that the tag authentication device according to the embodiment of the present disclosure can realize all the method steps realized by the method embodiment and can achieve the same technical effect, and the parts and beneficial effects which are the same as those of the method embodiment in the present embodiment will not be detailed herein.

As illustrated in FIG. 11, a tag authentication device according to an embodiment of the present disclosure is provided. The tag authentication device is applied in a subscription entity. The tag authentication device includes: a first transmitting unit 1101 configured to transmit first information to an authentication entity, for transmitting a first request to a tag. The first request includes authentication information. The authentication information is generated based on information of a tag group to which the tag belongs. The tag group includes one or more tags.

In some embodiments, the tag authentication device may further include a second transmitting unit configured to transmit group subscription information to the tag. The group subscription information includes one or more of a group identification information, a second group member identification information, a group key, and a second anti-replay attack parameter.

In some embodiments, the tag authentication device may further include a first generating unit configured to generate a first group authentication key based on one or more of a group key of the tag group to which the tag belongs, a core network nonce, or a first anti-replay attack parameter.

In some embodiments, the first information includes one or more of the first group authentication key, the core network nonce, and the first anti-replay attack parameter.

It should be noted that the tag authentication device according to the embodiment of the present disclosure can realize all the method steps realized by the method embodiment and can achieve the same technical effect, and the parts and beneficial effects which are the same as those of the method embodiment in the present embodiment will not be detailed herein.

It should be noted that the division of the units in the embodiments of the present disclosure is schematic and merely represents a logical function division. There may be other division manners in actual implementation. In addition, the functional units in the various embodiments of the present disclosure may be integrated into one processing unit, or each unit may physically exist alone, or two or more units may be integrated into one unit. The above-mentioned integrated units may be implemented in the form of hardware, or in the form of software functional units.

When the integrated unit is implemented in the form of a software functional unit and sold or used as an independent product, it may be stored in a processor-readable storage medium. Based on such an understanding, the technical solution of the present disclosure, in essence, or the part contributing to the related art, or all or part of the technical solution, may be embodied in the form of a computer software product. The computer software product is stored in a storage medium and includes several instructions for enabling a computer device (which may be a personal computer, a server, or a network device, etc.) or a processor to execute all or part of the steps of the methods described in the various embodiments of the present disclosure. The aforementioned storage medium includes various media capable of storing program codes, such as a USB flash drive, a removable hard disk, a Read-Only Memory (ROM), a Random Access Memory (RAM), a magnetic disk, or an optical disk.

An embodiment of the present disclosure further provides a communication device. The communication device includes a memory, a processor, and a program stored in the memory and executable on the processor. The processor, when executing the program, implements the steps of the tag authentication method as described above.

An embodiment of the present disclosure further provides a computer program product. The computer program product includes computer instructions. The computer instructions, when executed by a processor, implement the various processes of the tag authentication method embodiments as described above, and the same technical effect can be achieved. Details thereof will not be repeated here to avoid repetition.

An embodiment of the present disclosure further provides a processor-readable storage medium having a program stored thereon. The program, when executed by a processor, implements the various processes of the tag authentication method embodiments as described above, and the same technical effect can be achieved. Details thereof will not be repeated here to avoid repetition. The processor-readable storage medium may be any usable medium or data storage device that the processor can access, including but not limited to a magnetic memory, such as a floppy disk, a hard disk, a magnetic tape, a Magneto-Optical Disk (MO), etc, an optical memory, such as a Compact Disc (CD), a Digital Versatile Disc (DVD), a Blu-ray Disc, a High-Definition Versatile Disc (HVD), etc, and a semiconductor memory, such as ROM, Erasable Programmable Read-Only Memory (EPROM), Live Erasable Programmable Read Only Memory (EEPROM), Non-Volatile Memory (NAND FLASH), Solid State Disk (Solid State Drive, SSD), etc.

It should be noted that, in the present disclosure, terms "comprise", "include" or any other variations thereof are intended to cover non-exclusive inclusions, such that the process, method, goods, or device including a series of elements do not only include those elements, but further include other elements that are not explicitly listed, or further include inherent elements of the process, method, goods, or device. In a case that there are no more restrictions, an element qualified by the statement "comprises a ..." does not exclude the presence of additional identical elements in the process, method, goods, or device that includes the element.

From the description of the above embodiments, those skilled in the art can clearly understand that the method according to the above embodiments can be implemented by means of software, together with a necessary general hardware platform, and of course can also be implemented by means of hardware, but in many cases the former means is a better implementation. Based on this understanding, all or part of the technical solutions according to the present disclosure, or the part thereof that contributes to the prior art, can be embodied in the form of a software product. The computer software product is stored in a storage medium (e.g., an ROM/RAM, a magnetic disk, or an optical disc) and contains instructions to enable a terminal (e.g., a mobile phone, a computer, a server, or a network device, etc.) to perform the method described in each of the embodiments of the present disclosure.

It should be noted that the division of each module is only a division of a logic function, and when the actual implementation is implemented, all or part of the division may be integrated into one physical entity, or may be physically separated. And these modules can all be implemented in the form of software calling by a processing element, or can be implemented in the form of hardware; or part of the modules can be realized in the form of calling software by the processing element, and part of the modules can be realized in the form of hardware. For example, a determining module may be a separate processing element, or may be integrated in a chip of the device, or may be stored in the memory of the device in the form of a program code, and the function of the determining module may be called and executed by a processing element of the device. Other modules are implemented similarly. In addition, all or part of the modules may be integrated together or may be independently realized. The processing element described herein may be an integrated circuit with signal processing capability. In an implementation, the steps of the method or the modules may be accomplished by hardware integrated logic circuits in the processor element or by instructions in the form of software.

For example, the modules, units, subunits, or submodules may be one or more integrated circuits configured to implement the above method, such as one or more Application Specific Integrated Circuits (ASICs), or one or more digital signal processors (DSPs), or one or more Field Programmable Gate Arrays (FPGAs), etc. For another example, when one of the above modules is implemented in the form of a processing element scheduler code, the processing element may be a general purpose processor, such as a Central Processing Unit (CPU) or other processors that can call the program code. For another example, these modules may be integrated and implemented in the form of a system-on-a-chip (SOC).

Terms "first" and "second" in the specification and claims of the present disclosure are used to distinguish similar objects, rather than to describe a specific sequence or priority. It will be appreciated that the data so used may be interchanged under appropriate circumstances such that the embodiments of the present disclosure described herein may be implemented, for example, in sequences other than those illustrated or described herein. In addition, terms "including" and "having" and any variations thereof in the embodiments of the present disclosure are intended to cover non-exclusive inclusions. For example, a process, method, system, product, or device that includes a series of steps or units is not necessarily limited to those clearly listed steps or units, but may also include other steps or units that are not clearly listed or are inherent to the process, method, product, or device. In addition, as used in the specification and claims, "and/or" means at least one of the connected objects. For example, A and/or B and/or C means 7 cases including A alone, B alone, C alone, and both A and B present, B and C present, A and C present, and A, B, and C present. Similarly, the use of "at least one of A and B" in the present description and claims is to be understood as "A alone, B alone, or both A and B present".

The embodiments of the present disclosure are described above with reference to the accompanying drawings, but the present disclosure is not limited to the above specific implementations, which are merely illustrative, rather than restrictive. Under the motivation of the present disclosure, those skilled in the art can also make many variations without departing from the principles of the present disclosure and the scope of the claims as appended. These variations are to be encompassed by the protect scope of present disclosure.

## Claims

1. An ambient Internet of Things (IoT) device authentication method, performed by an ambient IoT device, and comprising:
receiving a first request transmitted by an authentication entity, wherein the first request comprises authentication information, the authentication information being generated based on information of an ambient IoT device group to which the ambient IoT device belongs, and the ambient IoT device group comprising one or more ambient IoT devices; and
performing authentication based on the first request.

2. The ambient IoT device authentication method according to claim 1, wherein the authentication information comprises one or more of:
a core network nonce;
an authentication network element nonce;
first group member identification information;
a network element authentication token; and
a first anti-replay attack parameter.

3. The ambient IoT device authentication method according to claim 2, wherein the performing the authentication based on the first request comprises:
verifying the first group member identification information;
verifying the network element authentication token based on one or more of a group key stored in the ambient IoT device, the core network nonce, the authentication network element nonce, or the first group member identification information; and
generating an ambient IoT device authentication response in response to a successful verification of the first group member identification information and a successful verification of the network element authentication token.

4. The ambient IoT device authentication method according to claim 3, further comprising:
verifying a first group authentication key based on the first anti-replay attack parameter and a second anti-replay attack parameter that is stored in the ambient IoT device, wherein the first group authentication key is a group authentication key used by the authentication entity when generating the network element authentication token;
wherein the generating the ambient IoT device authentication response comprises:
generating the ambient IoT device authentication response in response to the successful verification of the first group member identification information, a successful verification of the first group authentication key, and the successful verification of the network element authentication token.

5. The ambient IoT device authentication method according to claim 3 or 4, wherein the verifying the network element authentication token based on one or more of the group key stored in the ambient IoT device, the core network nonce, the authentication network element nonce, or the first group member identification information comprises:
generating a second group authentication key based on the group key and the core network nonce;
generating a group member authentication key based on the second group authentication key, the authentication network element nonce, and the first group member identification information; and
verifying the network element authentication token based on the group member authentication key.

6. The ambient IoT device authentication method according to claim 5, wherein the generating the ambient IoT device authentication response comprises:
generating an ambient IoT device nonce;
generating a data protection key based on the group member authentication key and the ambient IoT device nonce; and
generating the ambient IoT device authentication response based on the data protection key.

7. The ambient IoT device authentication method according to claim 6, further comprising:
storing the first anti-replay attack parameter in the authentication information and/or the data protection key.

8. The ambient IoT device authentication method according to claim 6, further comprising:
transmitting a first response to the authentication entity, wherein the first response comprises one or more of:
the ambient IoT device authentication response; and
the ambient IoT device nonce.

9. The ambient IoT device authentication method according to claim 8, further comprising:
receiving an ambient IoT device temporary identification information ciphertext transmitted by the authentication entity, wherein the ambient IoT device temporary identification information ciphertext comprises ambient IoT device temporary identification information.

10. The ambient IoT device authentication method according to claim 1, further comprising:
receiving group subscription information transmitted by a subscription entity, wherein the group subscription information comprises one or more of:
a group identification information;
a second group member identification information;
a group key; and
a second anti-replay attack parameter.

11. An ambient IoT device authentication method, performed by an authentication entity, and comprising:
receiving first information transmitted by a subscription entity; and
transmitting a first request to an ambient IoT device based on the first information, wherein the first request comprises authentication information, the authentication information being generated based on information of an ambient IoT device group to which the ambient IoT device belongs, and the ambient IoT device group comprising one or more ambient IoT devices.

12. The ambient IoT device authentication method according to claim 11, wherein the first information comprises one or more of:
a first group authentication key;
a core network nonce; and
a first anti-replay attack parameter.

13. The ambient IoT device authentication method according to claim 12, wherein the transmitting the first request to the ambient IoT device comprises:
generating an authentication network element nonce;
generating a group member authentication key based on the first group authentication key, first group member identification information, and the authentication network element nonce;
generating a network element authentication token based on the group member authentication key; and
transmitting the first request to the ambient IoT device, wherein the first request comprises the authentication information, the authentication information comprising one or more of:
the core network nonce;
the authentication network element nonce;
the first group member identification information;
the network element authentication token; and
the first anti-replay attack parameter.

14. The ambient IoT device authentication method according to claim 11, further comprising:
receiving a first response transmitted by the ambient IoT device, wherein the first response comprises one or more of:
an ambient IoT device authentication response; and
an ambient IoT device nonce.

15. The ambient IoT device authentication method according to claim 14, further comprising:
transmitting an ambient IoT device temporary identification information ciphertext to the ambient IoT device, wherein the ambient IoT device temporary identification information ciphertext comprises ambient IoT device temporary identification information.

16. The ambient IoT device authentication method according to claim 15, wherein the ambient IoT device temporary identification information ciphertext is generated through:
generating a data protection key based on the group member authentication key of the authentication entity and the ambient IoT device nonce;
verifying the ambient IoT device authentication response based on the data protection key;
generating the ambient IoT device temporary identification information in response to a successful verification of the ambient IoT device authentication response; and
generating the ambient IoT device temporary identification information ciphertext based on the data protection key and the ambient IoT device temporary identification information.

17. An ambient IoT device authentication method, performed by a subscription entity, and comprising:
transmitting first information to an authentication entity, for transmitting a first request to an ambient IoT device, wherein the first request comprises authentication information, the authentication information being generated based on information of an ambient IoT device group to which the ambient IoT device belongs, and the ambient IoT device group comprising one or more ambient IoT devices.

18. The ambient IoT device authentication method according to claim 17, further comprising:
transmitting group subscription information to the ambient IoT device, wherein the group subscription information comprises one or more of:
a group identification information;
a second group member identification information;
a group key; and
a second anti-replay attack parameter.

19. The ambient IoT device authentication method according to claim 17, further comprising:
generating a first group authentication key based on one or more of a group key of the ambient IoT device group to which the ambient IoT device belongs, a core network nonce, or a first anti-replay attack parameter.

20. The ambient IoT device authentication method according to claim 19, wherein the first information comprises one or more of:
the first group authentication key;
the core network nonce; and
the first anti-replay attack parameter.

21. An ambient IoT device authentication device, applied in an ambient IoT device, and comprising a memory, a transceiver, and a processor, wherein,
the memory is configured to store a computer program;
the transceiver is configured to transmit and receive data under control of the processor; and
the processor is configured to read the computer program in the memory and perform the following steps:
receiving a first request transmitted by an authentication entity, wherein the first request comprises authentication information, the authentication information being generated based on information of an ambient IoT device group to which the ambient IoT device belongs, and the ambient IoT device group comprising one or more ambient IoT devices; and
performing authentication based on the first request.

22. The ambient IoT device authentication device according to claim 21, wherein the authentication information comprises one or more of:
a core network nonce;
an authentication network element nonce;
first group member identification information;
a network element authentication token; and
a first anti-replay attack parameter.

23. The ambient IoT device authentication device according to claim 22, wherein the processor is further configured to read the computer program in the memory and perform the following steps:
verifying the first group member identification information;
verifying the network element authentication token based on one or more of a group key stored in the ambient IoT device, the core network nonce, the authentication network element nonce, or the first group member identification information; and
generating an ambient IoT device authentication response in response to a successful verification of the first group member identification information and a successful verification of the network element authentication token.

24. The ambient IoT device authentication device according to claim 23, wherein the processor is further configured to read the computer program in the memory and perform the following steps:
verifying a first group authentication key based on the first anti-replay attack parameter and a second anti-replay attack parameter that is stored in the ambient IoT device, wherein the first group authentication key is a group authentication key used by the authentication entity when generating the network element authentication token; and
generating the ambient IoT device authentication response in response to the successful verification of the first group member identification information, a successful verification of the first group authentication key, and the successful verification of the network element authentication token.

25. The ambient IoT device authentication device according to claim 23 or 24, wherein the processor is further configured to read the computer program in the memory and perform the following steps:
generating a second group authentication key based on the group key and the core network nonce;
generating a group member authentication key based on the second group authentication key, the authentication network element nonce, and the first group member identification information; and
verifying the network element authentication token based on the group member authentication key.

26. The ambient IoT device authentication device according to claim 25, wherein the processor is further configured to read the computer program in the memory and perform the following steps:
generating an ambient IoT device nonce;
generating a data protection key based on the group member authentication key and the ambient IoT device nonce; and
generating the ambient IoT device authentication response based on the data protection key.

27. The ambient IoT device authentication device according to claim 26, wherein the processor is further configured to read the computer program in the memory and perform the following step:
storing the first anti-replay attack parameter in the authentication information and/or the data protection key.

28. The ambient IoT device authentication device according to claim 26, wherein the processor is further configured to read the computer program in the memory and perform the following step:
transmitting a first response to the authentication entity, wherein the first response comprises one or more of:
the ambient IoT device authentication response; and
the ambient IoT device nonce.

29. The ambient IoT device authentication device according to claim 28, wherein the processor is further configured to read the computer program in the memory and perform the following step:
receiving an ambient IoT device temporary identification information ciphertext transmitted by the authentication entity, wherein the ambient IoT device temporary identification information ciphertext comprises ambient IoT device temporary identification information.

30. The ambient IoT device authentication device according to claim 21, wherein the processor is further configured to read the computer program in the memory and perform the following step:
receiving group subscription information transmitted by a subscription entity, wherein the group subscription information comprises one or more of:
a group identification information;
a second group member identification information;
a group key; and
a second anti-replay attack parameter.

31. An ambient IoT device authentication device, applied in an authentication entity, and comprising a memory, a transceiver, and a processor, wherein,
the memory is configured to store a computer program;
the transceiver is configured to transmit and receive data under control of the processor; and
the processor is configured to read the computer program in the memory and perform the following steps:
receiving first information transmitted by a subscription entity; and
transmitting a first request to an ambient IoT device based on the first information, wherein the first request comprises authentication information, the authentication information being generated based on information of an ambient IoT device group to which the ambient IoT device belongs, and the ambient IoT device group comprising one or more ambient IoT devices.

32. The ambient IoT device authentication device according to claim 31, wherein the first information comprises one or more of:
a first group authentication key;
a core network nonce; and
a first anti-replay attack parameter.

33. The ambient IoT device authentication device according to claim 32, wherein the processor is further configured to read the computer program in the memory and perform the following steps:
generating an authentication network element nonce;
generating a group member authentication key based on the first group authentication key, first group member identification information, and the authentication network element nonce;
generating a network element authentication token based on the group member authentication key; and
transmitting the first request to the ambient IoT device, wherein the first request comprises the authentication information, the authentication information comprising one or more of:
the core network nonce;
the authentication network element nonce;
the first group member identification information;
the network element authentication token; and
the first anti-replay attack parameter.

34. The ambient IoT device authentication device according to claim 31, wherein the processor is further configured to read the computer program in the memory and perform the following step:
receiving a first response transmitted by the ambient IoT device, wherein the first response comprises one or more of:
an ambient IoT device authentication response; and
an ambient IoT device nonce.

35. The ambient IoT device authentication device according to claim 34, wherein the processor is further configured to read the computer program in the memory and perform the following step:
transmitting an ambient IoT device temporary identification information ciphertext to the ambient IoT device, wherein the ambient IoT device temporary identification information ciphertext comprises ambient IoT device temporary identification information.

36. The ambient IoT device authentication device according to claim 35, wherein the ambient IoT device temporary identification information ciphertext is generated through:
generating a data protection key based on the group member authentication key of the authentication entity and the ambient IoT device nonce;
verifying the ambient IoT device authentication response based on the data protection key;
generating the ambient IoT device temporary identification information in response to a successful verification of the ambient IoT device authentication response; and
generating the ambient IoT device temporary identification information ciphertext based on the data protection key and the ambient IoT device temporary identification information.

37. An ambient IoT device authentication device, applied in a subscription entity, and comprising a memory, a transceiver, and a processor, wherein,
the memory is configured to store a computer program;
the transceiver is configured to transmit and receive data under control of the processor; and
the processor is configured to read the computer program in the memory and perform the following step:
transmitting first information to an authentication entity, for transmitting a first request to an ambient IoT device, wherein the first request comprises authentication information, the authentication information being generated based on information of an ambient IoT device group to which the ambient IoT device belongs, and the ambient IoT device group comprising one or more ambient IoT devices.

38. The ambient IoT device authentication device according to claim 37, wherein the processor is further configured to read the computer program and perform the following step:
transmitting group subscription information to the ambient IoT device, wherein the group subscription information comprises one or more of:
a group identification information;
a second group member identification information;
a group key; and
a second anti-replay attack parameter.

39. The ambient IoT device authentication device according to claim 37, wherein the processor is further configured to read the computer program and perform the following step:
generating a first group authentication key based on one or more of a group key of the ambient IoT device group to which the ambient IoT device belongs, a core network nonce, or a first anti-replay attack parameter.

40. The ambient IoT device authentication device according to claim 39, wherein the first information comprises one or more of:
the first group authentication key;
the core network nonce; and
the first anti-replay attack parameter.

41. An ambient IoT device authentication device, applied in an ambient IoT device, and comprising:
a first receiving unit, configured to receive a first request transmitted by an authentication entity, wherein the first request comprises authentication information, the authentication information being generated based on information of an ambient IoT device group to which the ambient IoT device belongs, and the ambient IoT device group comprising one or more ambient IoT devices; and
a first authentication unit, configured to perform authentication based on the first request.

42. An ambient IoT device authentication device, applied in an authentication entity, and comprising:
a first receiving unit, configured to receive first information transmitted by a subscription entity; and
a first transmitting unit, configured to transmit a first request to an ambient IoT device based on the first information, wherein the first request comprises authentication information, the authentication information being generated based on information of an ambient IoT device group to which the ambient IoT device belongs, and the ambient IoT device group comprising one or more ambient IoT devices.

43. An ambient IoT device authentication device, applied in a subscription entity, and comprising:
a first transmitting unit, configured to transmit first information to an authentication entity, for transmitting a first request to an ambient IoT device, wherein the first request comprises authentication information, the authentication information being generated based on information of an ambient IoT device group to which the ambient IoT device belongs, and the ambient IoT device group comprising one or more ambient IoT devices.

44. A computer program product, comprising computer instructions, wherein the computer instructions, when executed by a processor, implement the ambient IoT device authentication method according to any one of claims 1 to 20.
